(19) Europäisches Patentamt
European Patent Office
Office européen des brevets

(11) **EP 2 305 989 B1**

(12) **EUROPEAN PATENT SPECIFICATION**

(45) Date of publication and mention
of the grant of the patent:
**18.07.2012 Bulletin 2012/29**

(51) Int Cl.:
*F02D 45/00* (2006.01)     *F02D 29/02* (2006.01)
*F02D 41/02* (2006.01)     *F02D 41/22* (2006.01)

(21) Application number: **09746425.9**

(22) Date of filing: **10.03.2009**

(86) International application number:
**PCT/JP2009/054533**

(87) International publication number:
**WO 2009/139218 (19.11.2009 Gazette 2009/47)**

(54) **DEVICE AND METHOD FOR JUDGING ABNORMALITY OF IDLE CONTROL SYSTEM**

VORRICHTUNG UND VERFAHREN ZUM BEURTEILEN VON ANOMALITÄT EINES
LEERLAUFREGULIERUNGSSYSTEMS

DISPOSITIF ET PROCEDE D'ESTIMATION D'UNE ANOMALIE D'UN SYSTEME DE COMMANDE
DE RALENTI

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(30) Priority: **16.05.2008 JP 2008129517**

(43) Date of publication of application:
**06.04.2011 Bulletin 2011/14**

(73) Proprietor: **Honda Motor Co., Ltd.**
**Minato-ku**
**Tokyo 107-8556 (JP)**

(72) Inventors:
• **IZUMIURA, Atsushi**
**Wako-shi**
**Saitama 351-0193 (JP)**

• **HARA, Hirofumi**
**Wako-shi**
**Saitama 351-0193 (JP)**
• **HASEGAWA, Mamoru**
**Wako-shi**
**Saitama 351-0193 (JP)**

(74) Representative: **Prechtel, Jörg et al**
**Weickmann & Weickmann**
**Patentanwälte**
**Postfach 86 08 20**
**81635 München (DE)**

(56) References cited:
**EP-A2- 1 088 978      EP-A2- 1 132 604
EP-A2- 1 215 386      GB-A- 2 323 687
JP-A- 01 060 725      JP-A- 05 263 694
JP-A- 2001 098 985      JP-A- 2003 343 361**

**Description**

[Field of the Invention]

The present invention relates to an abnormality-determining device and method for an idling control system that controls an idling operation of an internal combustion engine.

[Background Art]

EP 1 132 604 discloses an abnormality-determining device for determining abnormality of an idling control system that determines a fuel supply amount of the fuel to be supplied to an internal combustion engine such that an operation state of the engine b3ecomes a predetermined idling operation state, and controls an idling operation of the engine based on the determined fuel supply amount, comprising:

  idling operation-determining means for determining whether or not the engine is in the predetermined idling operation state;
  parameter detecting means for detecting at least on of combustion state parameter indicative of a combustion state of the engine and a load parameter indicative of load on the engine;
  threshold value-determining means for determining a threshold value for determining abnormality of the idling control system based on at least one of the combustion state parameter and the load parameter which are detected when the engine is in the predetermined idling operation state;
  fuel supply amount-acquiring means for acquiring the fuel supply amount; and
  abnormality determining means for determining abnormality of the idling control system based on a result of comparison between the acquired fuel supply amount and the determined threshold value.

Conventionally, there has been proposed an abnormality-determining device of this kind in Patent Literature 1. This abnormality-determining device is configured to determine abnormality of a fuel injection valve of an internal combustion engine, and the abnormality determination is carried out as follows:

  First, a learning correction coefficient for correcting a basic value of a fuel injection amount of fuel to be injected by a fuel injection valve is calculated, and the calculated learning correction coefficient is stored in association with an operation state of the engine at the time. Then, the difference between one of the stored learning correction coefficients, which is associated with an idling operation state, and another of the same, which is associated with a predetermined operation state in which the basic value of the fuel injection amount is relatively large (hereinafter referred to as "the correction coefficient difference") is calculated. Next, when the calculated correction coefficient difference is not less than a predetermined threshold value, it is determined that the fuel injection valve is abnormal.

Further, blow-by gasses recirculating from a crankcase of the engine into an intake pipe of the same have influence to change the learning correction coefficient, and accordingly the above-mentioned correction coefficient difference is changed, which sometimes causes erroneous determination of abnormality of the fuel injection valve. For this reason, in the conventional abnormality-determining device, to prevent such erroneous determination, parameters indicative of a degree of generation of blow-by gasses are detected, and the above-mentioned predetermined threshold value is set according to the detected parameters. The parameters indicative of a degree of generation of blow-by gasses are engine coolant temperature detected when the engine is in the above-mentioned predetermined operation state, a time period which has elapsed after the start of the engine, and a cumulative value of operating time of the engine.

As described above, in the conventional abnormality-determining device, on precondition that the amount of fuel to be supplied to the engine is constant during the idling operation of the engine unless influenced by blow-by gasses, the threshold value is merely set according to the parameters indicative of the degree of generation of blow-by gasses, such as the cumulative value of operating time of the engine. However, depending on the type of the engine, even when the engine is in idling operation and at the same time there is no influence of blow-by gasses, the amount of fuel to be supplied is not necessarily constant but sometimes varies, and in this case, it is impossible for the conventional abnormality-determining device to carry out the abnormality determination with high accuracy.

The present invention has been made to provide a solution to such a problem as described above, and an object thereof is to provide an abnormality-determining device and method for an idling control system that controls an idling operation of an internal combustion engine, which are capable of determining abnormality of the idling control system with high accuracy.

[Patent Literature 1]
Japanese Patent No. 2657713

[Disclosure of the Invention]

To attain the above object, in a first aspect of the present invention, there is provided an abnormality-determining device in accordance with claim 1. The device determines abnormality of an idling control system that determines a fuel supply amount of fuel to be supplied to an internal combustion engine such that an operation state of the engine becomes a predetermined idling operation state, and controls an idling operation of the engine based on the determined fuel supply amount, comprising idling operation-determining means for determining whether or not the engine is in the predetermined idling operation state, parameter detecting means for detecting at least one of a combustion state parameter indicative of a combustion state of the engine and a load parameter indicative of load on the engine, threshold value-determining means for determining a threshold value for determining abnormality of the idling control system based on at least one of the combustion state parameter and the load parameter which are detected when the engine is in the predetermined idling operation state, fuel supply amount-acquiring means for acquiring the fuel supply amount, and abnormality determining means for determining abnormality of the idling control system based on a result of comparison between the acquired fuel supply amount and the determined threshold value.

According to this abnormality-determining device for an idling control system, it is determined by the idling operation-determining means whether or not the engine is in the predetermined idling operation state, and the combustion state parameter indicative of a combustion state of the engine and/or the load parameter indicative of load on the engine is/are detected by the parameter detecting means. Further, based on the combustion state parameter and/or the load parameter detected when the engine is in the predetermined idling operation state, the threshold value for determining abnormality of the idling control system is determined by the threshold value-determining means. Further, the fuel supply amount of fuel to be supplied to the engine so as to control the operation state of the engine to the predetermined idling operation state is acquired by the fuel supply amount-acquiring means, and based on a result of comparison between the acquired fuel supply amount and the determined threshold value, the abnormality of the idling control system is determined by the abnormality determining means.

In the idling control system, since the fuel supply amount is determined such that the operation state of the engine becomes the predetermined idling operation state, when the idling control system is abnormal, a deviation of the fuel supply amount with respect to the threshold value becomes large. Therefore, based on the result of comparison between the fuel supply amount and the threshold value, it is possible to determine abnormality of the idling control system. Further, during idling operation, the fuel supply amount is changed so as to maintain the predetermined idling operation state in accordance with changes in the combustion state of the engine and load on the same based on the above-described determining method. According to the present invention, the threshold value for the abnormality determination is determined based on the combustion state parameter and/or the load parameter detected during idling operation, and hence it is possible to properly determine the threshold value so as to be commensurate with the fuel supply amount which is changed as above. Therefore, it is possible to determine the abnormality of the idling control system with high accuracy, according to changes in the operation state during idling of the engine.

Preferably, the engine is provided with an EGR device which causes part of burned gases generated by combustion in the engine to exist in a cylinder of the engine, and the combustion state parameter includes at least one of an EGR ratio parameter indicative of a ratio of an amount of burned gases caused to exist in the cylinder by the EGR device to a sum of an amount of fresh air drawn into the cylinder and the amount of the burned gases, a temperature of engine coolant for cooling the engine, and atmospheric pressure.

With the configuration of this preferred embodiment, as the combustion state parameter indicative of the combustion state of the engine, at least one of the EGR ratio parameter, the temperature of engine coolant for cooling the engine, and the atmospheric pressure is employed. Since each of these parameters has a close correlation with the combustion state of the engine, it is possible to properly determine the threshold value for the abnormality determination.

Preferably, at least one of a generator, an air conditioner, a transmission, and a power steering unit is connected to the engine, and the load parameter includes a parameter indicative of load caused by at least one of the generator, the air conditioner, the transmission, and the power steering unit.

With the configuration of this preferred embodiment, as the load parameter of the engine, the parameter indicative of load caused by at least one of the generator, the air conditioner, the transmission, and the power steering unit, which are connected to the engine, is employed. Since these elements are connected to the engine, the load caused by these elements acts on the engine during idling operation, and hence it is possible to properly determine the threshold value for the abnormality determination.

The abnormality determining means determines that the idling control system is abnormal when the fuel supply amount is not within a predetermined range including the threshold value.

In a case where the abnormality of the idling control system is determined based on the result of a simple comparison of the fuel supply amount and the threshold value, even when the idling control system is normal, variation in characteristics of the parameter detecting means causes fluctuation of the threshold value, which increases the deviation of the fuel supply amount with respect to the threshold value. As a result, it is sometimes erroneously determined that the idling control system is abnormal. With the configuration of the preferred embodiment, it is determined that the idling control system is abnormal when the fuel supply amount is not within the predetermined range including the threshold value, and hence it is possible to prevent the above-mentioned erroneous determination.

To attain the above object, in a second aspect of the present invention, there is provided an abnormality-determining method in accordance with claim 4. The method determines abnormality of an idling control system that determines a fuel supply amount of fuel to be supplied to an internal combustion engine such that an operation statue of the engine becomes a predetermined idling operation state, and controls an idling operation of the engine based on the determined fuel supply amount, comprising a step of determining whether or not the engine is in the predetermined idling operation state, a step of detecting at least one of a combustion state parameter indicative of a combustion state of the engine and a load parameter indicative of load on the engine, a step of determining a threshold value for determining abnormality of the idling control system based on at least one of the combustion state parameter and the load parameter which are detected when the engine is in the predetermined idling operation state, a step of acquiring the fuel supply amount, and a step of determining abnormality of the idling control system based on a result of comparison between the acquired fuel supply amount and the determined threshold value.

With the configuration of the second aspect of the present invention, it is possible to obtain the same advantageous effects as provided by the above-described first aspect of the present invention.

Preferably, the engine is provided with an EGR device which causes part of burned gases generated by combustion in the engine to exist in a cylinder of the engine, and the combustion state parameter includes at least one of an EGR ratio parameter indicative of a ratio of an amount of burned gases caused to exist in the cylinder by the EGR device to a sum of an amount of fresh air drawn into the cylinder and the amount of the burned gases, a temperature of engine coolant for cooling the engine, and atmospheric pressure.

Preferably, at least one of a generator, an air conditioner, a transmission, and a power steering unit is connected to the engine, and the load parameter includes a parameter indicative of load caused by at least one of the generator, the air conditioner, the transmission, and the power steering unit.

The step of determining abnormality of the idling control system determines that the idling control system is abnormal when the fuel supply amount is not within a predetermined range including the threshold value.

With the configurations of these preferred embodiments, it is possible to obtain the same advantageous effects as provided by the respective corresponding preferred embodiments of the first aspect of the present invention.

[Brief Description of the Drawings]

[FIG. 1] A block diagram of an internal combustion engine to which an abnormality-determining device according to the present embodiment is applied, a transmission, and so forth.
[FIG. 2] A schematic view of the engine to which the abnormality-determining device according to the present embodiment is applied.
[FIG. 3] A block diagram of the abnormality-determining device according to the present embodiment.
[FIG. 4] A flowchart of an abnormality determination process.
[FIG. 5] A flowchart of a continuation of FIG. 4.
[FIG. 6] An example of a qBASE map for use in the FIG. 4 process.
[FIG. 7] A diagram showing an example of a Kpa map for use in the FIG. 4 process.
[FIG. 8] A diagram showing an example of a Kegr map for use in the FIG. 4 process.
[FIG. 9] A diagram showing an example of a qEL map for use in the FIG. 4 process.
[FIG. 10] A diagram showing an example of a qAC map for use in the FIG. 4 process.
[FIG. 11] A diagram showing an example of a qAT map for use in the FIG. 4 process.
[FIG. 12] A diagram showing an example of a qPS map for use in the FIG. 4 process.
[FIG. 13] A diagram showing an example of an operation of the abnormality-determining device shown in FIG. 3.

[Best Mode for Carrying Out the Invention]

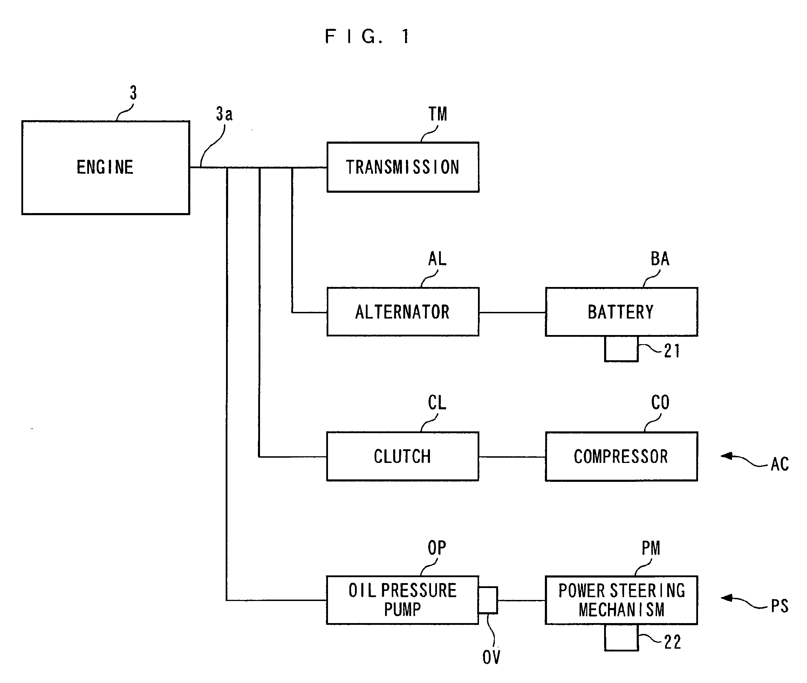

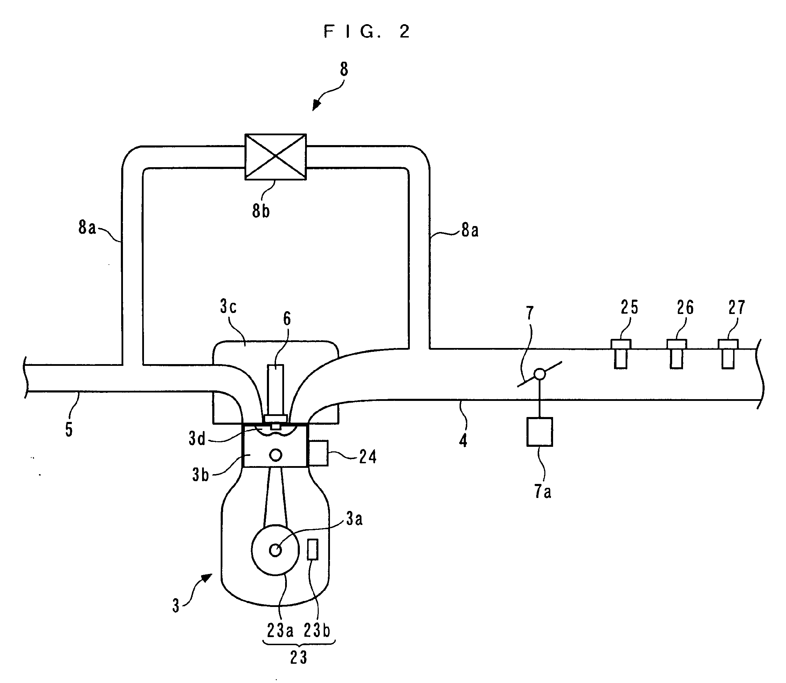

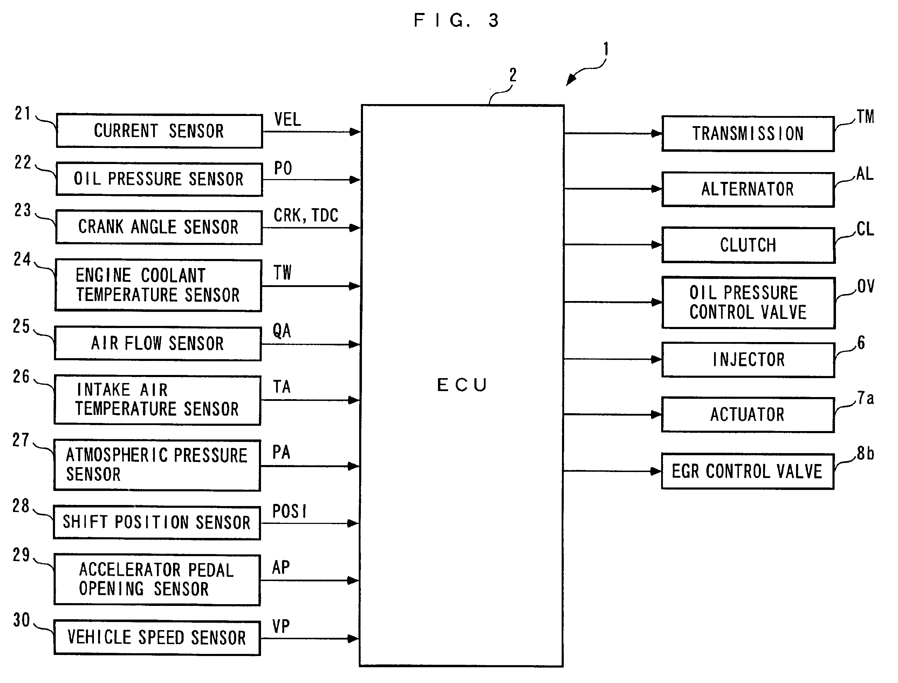

The invention will now be described in detail with reference to the drawings showing preferred embodiment thereof. FIG. 3 shows an abnormality-determining device 1 for an idling control system according to the present embodiment, and as shown in the figure, the abnormality-determining device 1 includes an ECU 2, and various sensors, referred to hereinafter. Further, FIGS. 1 and 2 schematically show an internal combustion engine 3 to which the abnormality-determining device 1 is applied. The internal combustion engine (hereinafter simply referred to as "the engine") 3 is a diesel engine that is installed on a vehicle, not shown, as a drive source, and this vehicle is provided with a transmission TM, and an alternator AL, an air conditioner AC, and a power steering unit PS, which are driven by the engine 3.

The transmission TM is a stepped automatic transmission, and includes a torque converter mechanically connected to a crankshaft 3a of the engine 3, an input shaft mechanically connected to the torque converter, an output shaft mechanically connected to drive wheels of the vehicle, a plurality of gear trains having respective gear ratios different from each other, and clutches that connect and disconnect between the plurality of gear trains and the input shaft and the output shaft, on a gear train-by-gear train basis, none of which are shown. Further, for the transmission TM, total four gear positions consisting of first, second, and third gear positions for forward travel, and one gear position for reverse travel are set by the plurality of gear trains.

Further, the operation of the transmission TM is controlled by the ECU 2, referred to hereinafter, according to a shift position of a shift lever (not shown) operated by a driver. Further, as the shift positions of the shift lever, there are set respective parking, neutral, reverse, drive, sports, and low ranges. More specifically, the above-mentioned control is performed as follows: When the shift position of the shift lever is in the parking or neutral range, the above-mentioned clutches are all held in the disconnected state, whereby the engagement between the crankshaft 3a and the drive wheels is released. On the other hand, when the shift position of the shift lever is in a range other than these, associated ones of the clutches are connected according to the shift position, whereby the crankshaft 3a and the drive wheels are held in the connected state. In this case, the power of the engine 3 input to the input shaft is changed in speed by the gear trains connected by the clutches, and is output to the output shaft, thereafter being transmitted to the drive wheels.

The above-mentioned alternator AL, which is formed by a combination of an AC generator and a rectifier, is mechanically connected to the crankshaft 3a, and at the same time is electrically connected to a battery BA and various electrical components. Further, the alternator AL generates electric power by converting part of motive power from the engine 3 into electric power, and the generated electric power is charged into the above-mentioned battery BA or is supplied to the above-mentioned electrical components. In this case, as the electric power generated by the alternator AL is larger, load on the engine 3 caused by the alternator AL becomes larger. Further, the operation of generating electric power performed by the alternator AL is controlled by the ECU 2.

Further, the battery BA has a current sensor 21 which detects an electric current VEL flowing from the alternator AL into the battery BA (hereinafter referred to as "the generated current"), and delivers a signal indicative of the detected electric current VEL to the ECU 2.

The above-mentioned air conditioner AC is provided for cooling a driver's compartment of the vehicle, and includes a rotary type compressor CO and an electromagnetic clutch CL. The compressor CO is connected to the crankshaft 3a via the clutch CL. In a state where the clutch CL is connected, the power of the engine 3 is transmitted to the compressor CO, and the compressor CO compresses refrigerant of the air conditioner AC by using part of the power of the engine 3. As the load on the air conditioner AC is larger, load on the engine 3 caused by the compressor CO becomes larger. Further, the operation of the clutch CL mentioned above is controlled by the ECU 2, whereby the crankshaft 3a and the compressor CO are connected and disconnected.

The power steering unit PS includes a power steering mechanism PM, an oil pressure pump OP, and an oil pressure control valve OV. The oil pressure pump OP is connected to the crankshaft 3a, converts part of the power of the engine 3 into oil pressure, and supplies the oil pressure to the power steering mechanism PM. The power steering mechanism PM is connected to a steering wheel and a handle of the vehicle, and is operated by an oil pressure (hereinafter referred to as "the pump oil pressure") PO supplied from the above-mentioned oil pressure pump OP for assisting a steering wheel operation by the driver. The pump oil pressure PO is controlled by changing the degree of opening of the above-mentioned oil pressure control valve OV by the ECU 2, whereby the assisting force by the power steering mechanism PM is controlled. In this case, as the pump oil pressure PO is larger, the assisting force becomes larger, and load on the engine 3 caused by the oil pressure pump OP becomes larger. Further, the power steering mechanism PM has an oil pressure sensor 22 which detects the pump oil pressure PO to deliver a signal indicative of the detected pump oil pressure PO to the ECU 2.

Further, as shown in FIG. 2, a cylinder head 3c of the engine 3 has an intake pipe 4 and an exhaust pipe 5 connected thereto, with a fuel injection valve (hereinafter referred to as "the injector") 6 mounted therethrough. The injector 6 is mounted through a central portion of the top wall of a cylinder 3d of the engine 3, such that it faces a piston 3b disposed in the cylinder 3d. Further, the injector 6 is connected to a high-pressure pump and a fuel tank, neither of which is shown, in the mentioned order via a common rail. The injector 6 has its valve-opening time period controlled by a drive signal based on a target fuel injection amount QOUT determined, as described hereinafter, by the ECU 2, whereby the amount of fuel injected from the injector 6 is controlled.

Further, a magnet rotor 23a is mounted on the crankshaft 3a of the engine 3. The magnet rotor 23a and an MRE pickup 23b form a crank angle sensor 23. The crank angle sensor 23 delivers a CRK signal and a TDC signal, which are both pulse signals, to the ECU 2 along with rotation of the crankshaft 3a. Each pulse of the CRK signal is generated whenever the crankshaft 3a rotates through a predetermined crank angle (e.g. 30°). The ECU 2 calculates rotational speed (hereinafter referred to as "the engine speed") NE of the engine 3 based on the CRK signal. The TDC signal indicates that the piston 3b is at a predetermined crank angle position in the vicinity of the top dead center (TDC) at the start of the intake stroke thereof.

An engine coolant temperature sensor 24 is mounted in the cylinder block of the engine 3. The engine coolant temperature sensor 24 senses a temperature TW of engine coolant of the engine 3 (hereinafter referred to as "the engine coolant temperature TW"), and delivers a signal indicative of the sensed engine coolant temperature TW to the ECU 2.

Further, a throttle valve 7 is provided in the intake pipe 4. An actuator 7 a formed e.g. by a DC motor is connected to the throttle valve 7. The opening of the throttle valve 7 (hereinafter referred to as the throttle valve opening") is controlled by controlling the duty factor of electric current supplied to the actuator 7a by the ECU 2.

Further, the intake pipe 4 has an air flow sensor 25, an intake air temperature sensor 26, and an atmospheric pressure sensor 27 inserted therein at respect locations upstream of the throttle valve 7. The air flow sensor 25 detects an amount of fresh air (hereinafter referred to as "the fresh air amount") QA drawn into the engine 3, the intake air temperature sensor 26 detects a temperature of fresh air (hereinafter referred to as "the intake air temperature") TA, and the atmospheric pressure sensor 27 detects atmospheric pressure PA, to deliver respective signals indicative of the detected fresh air amount QA, intake air temperature TA, and atmospheric pressure PA to the ECU. The intake air temperature TA is a parameter having a close correlation with the ambient air temperature.

Further, the engine 3 is provided with an EGR device 8 that includes an EGR pipe 8a and an EGR control valve 8b. The EGR pipe 8a connects between a portion of the intake pipe 4 downstream of the throttle valve 7 and the exhaust pipe 5. Part of exhaust gases exhausted from the engine 3 is recirculated into the intake pipe 4 via the EGR pipe 8a as EGR gases, and then flows into the cylinder 3d of the engine 3 together with fresh air. As a consequence, a combustion temperature within the engine 3 is lowered, whereby NOx contained in the exhaust gases is reduced in amount.

The above-mentioned EGR control valve 8b is implemented by a linear solenoid valve mounted in the EGR pipe 8a, and the valve lift amount thereof is linearly controlled by controlling the duty factor of supplied electric current (hereinafter referred to as "the EGR duty factor") by the ECU 2, whereby the amount of EGR gases is controlled. More specifically, as the EGR duty factor is larger, the valve lift amount becomes larger, whereby the amount of EGR gases (hereinafter referred to as "the EGR gas amount") is made larger. Further, the EGR duty factor is controlled based on a target EGR gas amount calculated by the ECU 2. As a consequence, the EGR gas amount is controlled to become equal to the target EGR gas amount.

Further, a shift position sensor 28 is connected to the ECU 2, and the shift position sensor 28 detects which of the aforementioned parking, neutral, reverse, drive, sports, and low ranges, the shift position of the shift lever is set, to deliver a POSI signal indicative of the detected range of the shift position to the ECU 2. Further, an accelerator pedal opening sensor 29 and a vehicle speed sensor 30 deliver signals to the ECU 2, which are respectively indicative of a stepped-on amount of an accelerator pedal (not shown) of the vehicle (hereinafter referred to as "the accelerator pedal opening") AP, and a speed of the vehicle, i.e. a vehicle speed VP.

The ECU 2 is implemented by a microcomputer comprising an I/O interface, a CPU, a RAM, and a ROM. The detection signals from the aforementioned sensors 21 to 30 are input to the CPU after the I/O interface performs A/D conversion and waveform shaping thereon. Based on these input signals, the ECU 2 determines an operation state of the engine 3, and based on the determined operation state of the engine, performs control of the engine 3, including control of the EGR gas amount, the throttle valve opening, and the fuel injection amount, according to control programs and the like stored in the ROM.

Further, when the detected accelerator pedal opening AP is approximately equal to 0, which means that the accelerator pedal is not stepped on, and at the same time the vehicle speed VP is approximately equal to 0, i.e. when the vehicle is stationary or creeping at a vehicle speed VP of approximately 0, the ECU 2 causes the engine 3 to perform an idling operation. The control during the idling operation is performed as follows: The target fuel injection amount QOUT is calculated such that the calculated engine speed NE becomes equal to a predetermined idle speed (e.g. 1000 rpm). It should be noted that the throttle opening is controlled to a fully closed state, and the target EGR gas amount is calculated according to the operation state of the engine 3.

Further, the ECU 2 determines abnormality of the idling control system that includes the injector 6, the throttle valve 7, the actuator 7a, and the EGR device 8, during the above-mentioned idling operation, as follows:

It should be noted that in the present embodiment, the idling control system according to the present invention, broadly includes not only the injector 6, the throttle valve 7, the actuator 7a, and the EGR device 8, but also all elements that have influence on the idling operation. Further, the ECU 2 corresponds to idling operation-determining means, parameter detecting means, threshold value-determining means, fuel supply amount-acquiring means, and abnormality determining means in the present invention. Further, the accelerator pedal opening sensor 29 and the vehicle speed sensor 30 correspond to the idling operation-determining means in the present invention, and the current sensor 21, the oil pressure sensor 22, the engine coolant temperature sensor 24, the air flow sensor 25, the intake air temperature sensor 26, and the atmospheric pressure sensor 27 correspond to the parameter detecting means in the present invention. Further, the alternator AL corresponds to a generator in the present invention.

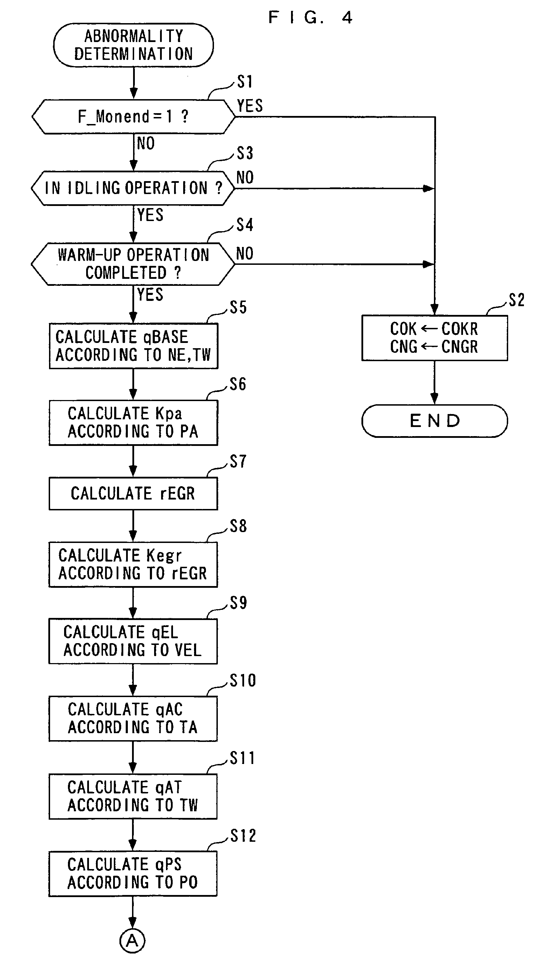

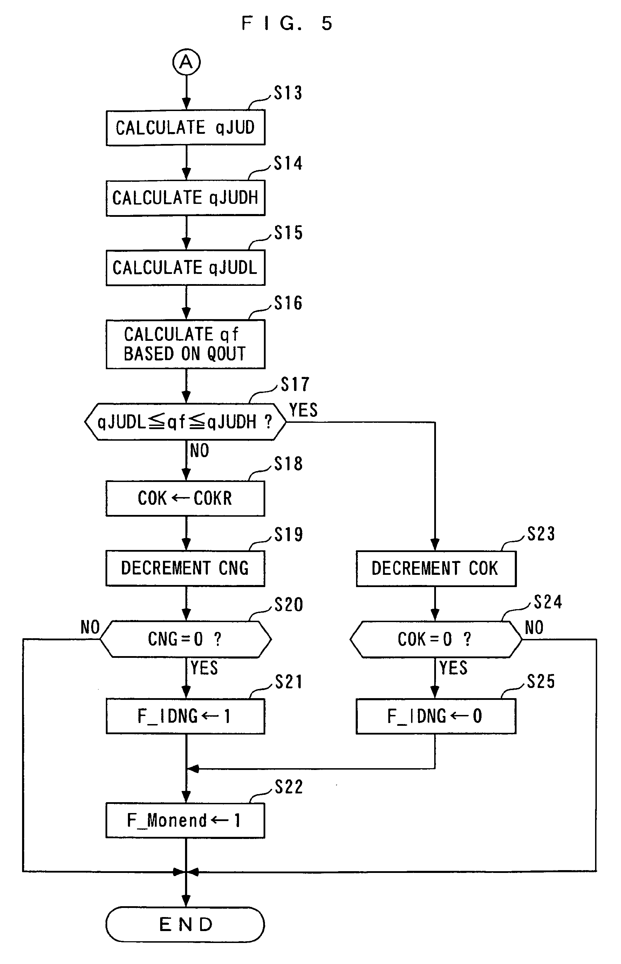

FIGS. 4 and 5 show an abnormality determination process for determining abnormality of the idling control system. This process is executed whenever a predetermined time period elapses (e.g. 10 msec) on condition that the ECU 2 is normal. First, in a step 1 (shown, as S1 in abbreviated form; the following steps are also shown in abbreviated form) in FIG. 4, it is determined whether or not a determination completion flag F_Monend is equal to 1. The determination completion flag F_Monend is set to 1 when a result of the abnormality determination by the present process is obtained, and is set to 0 when the idling operation is started. If the answer to the question of the step 1 is affirmative (YES), i.e. if the result of determination by the present process has been obtained after the start of the idling operation, a counter value COK of an OK counter and a counter value CNG of an NG counter are reset to predetermined values COKR and CNGR (e.g. values corresponding to several tens of seconds), respectively (step 2), and the present process is immediately terminated without carrying out the abnormality determination.

On the other hand, if the answer to the question of the step 1 is negative (NO), i.e. if the result of determination by the present process has not been obtained yet after the start of the idling operation, it is determined whether or not the engine 3 is idling (step 3), and it is determined whether or not the warm-up operation of the engine 3 has been completed (step 4). In the step 3, when both of the accelerator pedal opening AP and the vehicle speed VP are approximately equal to 0, it is determined that the engine is performing the idling operation. Further, in the step 4, when the detected engine coolant temperature TW is higher than a predetermined temperature, or when a time period which has elapsed after the start of the engine 3 is longer than a predetermined time period, it is determined that the warm-up operation has been completed.

If the answer to the question of the step 3 or 4 is negative (NO), i.e. if the engine is not performing the idling operation, or the warm-up operation has not been completed, the step 2 is executed, followed by terminating the present process. On the other hand, if both of the answers to the questions of the steps 3 and 4 are affirmative (YES), i.e. if the engine is performing the idling operation, and at the same time the warm-up operation has been completed, the following step 5 et seq. are executed to determine abnormality of the idling control system. As described above, the abnormality determination by the present process is carried out whenever the idling operation is executed. Further, the reason for executing the abnormality determination under the condition of completion of the warm-up operation by executing the step 4 is that when the warm-up operation has not been completed, the combustion of the engine 3 is not stable yet, and hence there is a fear that it is impossible to carry out the determination with high accuracy.

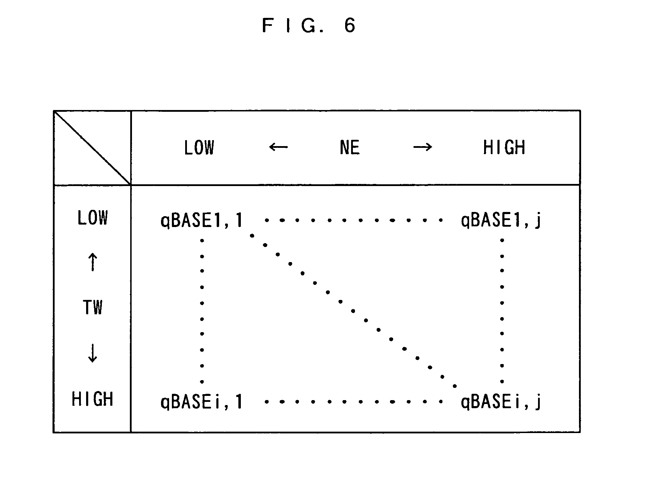

First, in the steps 5 to 14, a threshold value qJUD for abnormality determination, which is to be compared with the above-mentioned target fuel injection amount QOUT, is calculated. More specifically, in the step 5, a basic value qBASE of the threshold value qJUD is calculated by searching a qBASE map shown in FIG. 6 according to the engine speed NE and the engine coolant temperature TW. In the qBASE map, as the engine coolant temperature TW is lower, the basic value qBASE is set to a larger value. This is because of the following reason: As the engine coolant temperature TW is lower, the combustion is more liable to be unstable, and further, when the temperature of lubricating oil for the engine 3 is low, the viscosity of the lubricating oil is high, which increases the friction of the engine 3. Due to these causes, the target fuel injection amount QOUT is calculated to be a larger value so as to properly perform the idling operation. In view of this, the basic value qBASE is set as mentioned above so as to calculate the threshold value qJUD such that it is commensurate with such a target fuel injection amount QOUT.

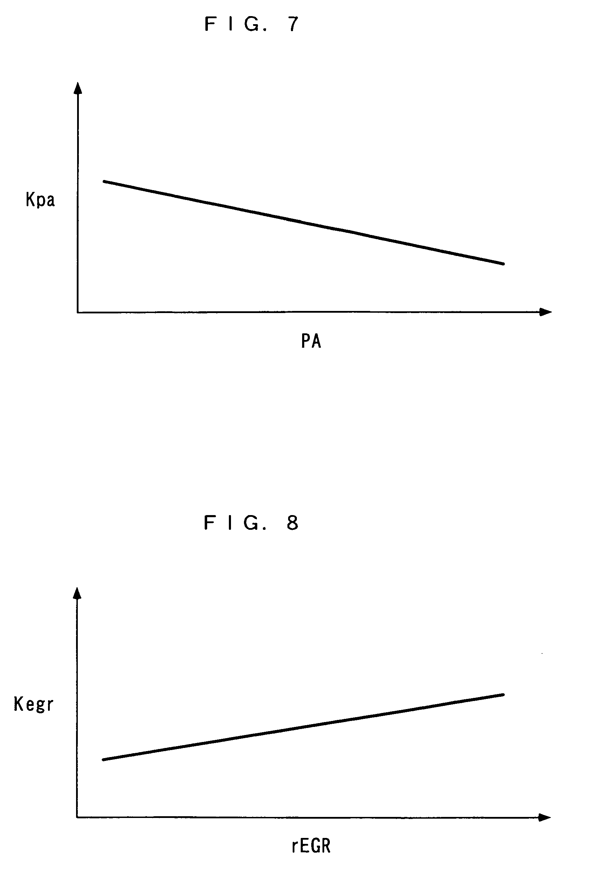

Then, in the steps 6 to 12, there are calculated various correction coefficients and correcting addition terms for correcting the basic value qBASE, so as to calculate the threshold value qJUD. First, in the step 6, an atmospheric pressure-dependent correction coefficient Kpa is calculated by searching a Kpa map shown in FIG. 7 according to the detected atmospheric pressure PA. In the Kpa map, as the atmospheric pressure PA is lower, the atmospheric pressure-dependent correction coefficient Kpa is set to a larger value. This is because of the following reason: As the atmospheric pressure PA is lower, the density of intake air drawn into the engine 3 is lower, so that the target fuel injection amount QOUT is calculated to be a larger value in order to increase the power by combustion. In view of this, the atmospheric pressure-dependent correction coefficient Kpa is set as mentioned above so as to calculate the threshold value qJUD such that it is commensurate with such a target fuel injection amount QOUT.

Next, an EGR ratio rEGR is calculated using the detected fresh air amount QA and the calculated target EGR gas amount (step 7). The EGR ratio rEGR is calculated by dividing the target EGR gas amount by the sum of the fresh air amount QA and the target EGR gas amount. As is clear from this calculation method, the EGR ratio rEGR represents a ratio of the EGR gas amount to the sum of the fresh air amount QA of fresh air drawn into the engine 3 and the EGR gas amount.

Then, an EGR-dependent correction coefficient Kegr is calculated by searching a Kegr map shown in FIG. 8 according to the EGR ratio rEGR calculated in the step 7 (step 8). In the Kegr map, as the EGR ratio rEGR is larger, the EGR-dependent correction coefficient Kegr is set to a larger value. This is because of the following reason: As the EGR ratio rEGR is larger, the fresh air amount QA of fresh air drawn into the cylinder 3d is smaller, so that the target fuel injection amount QOUT is calculated to be a larger value in order to increase the power by combustion. In view of this, the EGR-dependent correction coefficient Kegr is set as mentioned above so as to calculate the threshold value qJUD such that it is commensurate with such a target fuel injection amount QOUT.

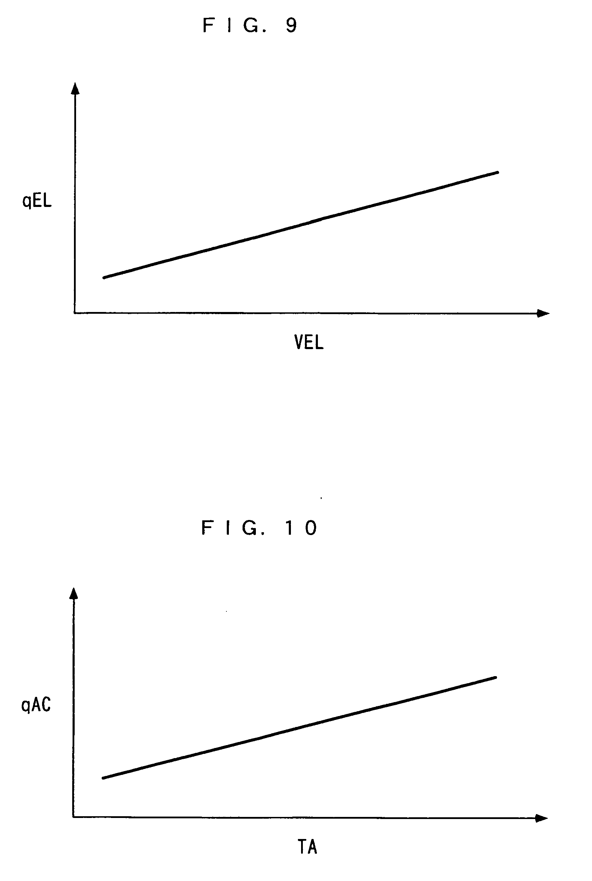

Next, a battery-dependent correcting addition term qEL is calculated by searching a qEL map shown in FIG. 9 according to the detected generated current VEL (step 9). In the qEL map, as the generated current VEL is larger, the battery-dependent correcting addition term qEL is set to a larger value. This is because of the following reason: As the generated current VEL is larger, i.e. as electric power generated by the alternator AL is larger, load on the engine 3 caused by the alternator AL is larger as mentioned above, and accordingly, the target fuel injection amount QOUT is calculated to be a larger value in order to maintain the engine speed NE at the above-mentioned idle speed. In view of this, the battery-dependent correcting addition term qEL is set as mentioned above so as to calculate the threshold value qJUD such that it is commensurate with such a target fuel injection amount QOUT.

Then, an air conditioner-dependent correcting addition term qAC is calculated by searching a qAC map shown in FIG. 10 according to the detected intake air temperature TA (step 10). In the qAC map, as the intake air temperature TA is higher, the air conditioner-dependent correcting addition term qAC is set to a larger value. This is because of the following reason: As the intake air temperature TA is higher, ambient air temperature, i.e. temperature in the driver's compartment of the vehicle is also higher. This increases the load on the air conditioner AC, and hence load on the engine 3 caused by the compressor CO is large as mentioned above, so that the target fuel injection amount QOUT is calculated to be a larger value. In view of this, the air conditioner-dependent correcting addition term qAC is set as mentioned above so as to calculate the threshold value qJUD such that it is commensurate with such a target fuel injection amount QOUT. It should be noted that when the above-mentioned clutch CL is in the disconnected state to disconnect between the crankshaft 3a and the compressor CO, the load caused by the compressor CO does not act on the engine 3, and hence the air conditioner-dependent correcting addition term qAC is set to 0.

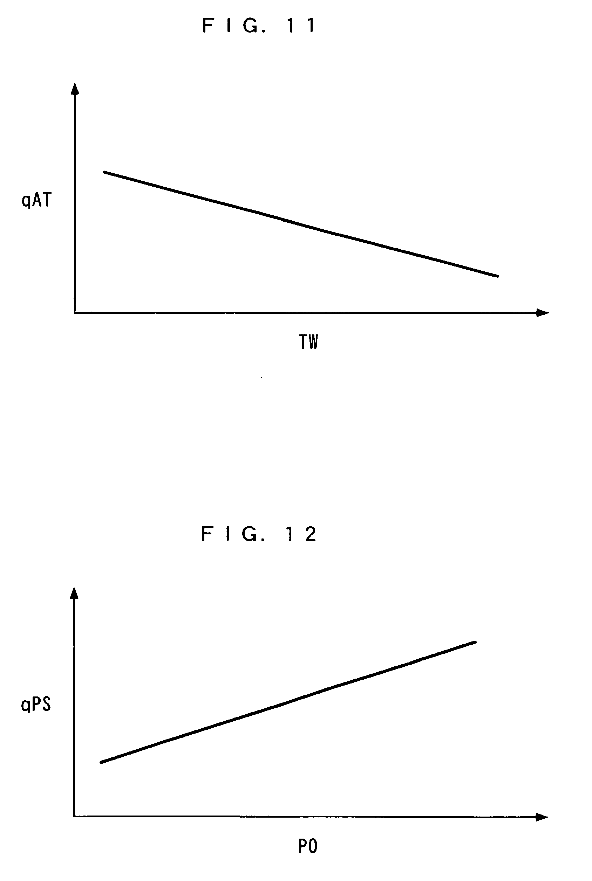

Next, a transmission-dependent correcting addition term qAT is calculated by searching a qAT map shown in FIG. 11 according to the engine coolant temperature TW (step 11). In the qAT map, as the engine coolant temperature TW is lower, the transmission-dependent correcting addition term qAT is set to a larger value. This is because of the following reason: As the engine coolant temperature TW is lower, the temperature of the transmission TM is lower, and hence the temperature of fluid in the torque converter of the transmission TM is low. This increases the viscosity of the fluid high and the friction of the transmission TM as a whole. Therefore, load on the engine 3 caused by the transmission TM is large, so that the target fuel injection amount QOUT is calculated to be a larger value. In view of this, the transmission-dependent correcting addition term qAT is set as mentioned above so as to calculate the threshold value qJUD such that it is commensurate with such a target fuel injection amount QOUT. It should be noted that when the shift position of the shift lever indicated by the detected POSI signal is in the parking or neutral range, the connection between the crankshaft 3a and the drive wheels is released as mentioned above, so that the load on the engine 3 caused by the transmission TM is very small, and hence transmission-dependent correcting addition term qAT is set to 0.

Then, a power steering unit-dependent correcting addition term qPS is calculated by searing a qPS map shown in FIG. 12 according to the detected pump oil pressure PO (step 12). In the qPS map, as the pump oil pressure PO is larger, the power steering unit-dependent correcting addition term qPS is set to a larger value. This is because as the pump oil pressure PO is larger, load on the engine 3 caused by the oil pressure pump PO is larger as mentioned above, so that due to this cause, the target fuel injection amount QOUT is calculated to be a larger value. In view of this, the power steering unit-dependent correcting addition term qPS is set as mentioned above so as to calculate the threshold value qJUD such that it is commensurate with such a target fuel injection amount QOUT.

Next, in the step 13 in FIG. 5, the threshold value qJUD is calculated. This calculation is carried out using the basic value qBASE calculated in the step 5, the atmospheric pressure-dependent correction coefficient Kpa, the EGR-dependent correction coefficient Kegr, the battery-dependent correcting addition term qEL, the air conditioner-dependent correcting addition term qAC, the transmission-dependent correcting addition term qAT, and the power steering unit-dependent correcting addition term qPS, calculated in the steps 6 to 12, respectively, by the following equation (1):

$$qJUD = qBASE \cdot Kpa \cdot Kegr + qEL + qAC + qAT + qPS \qquad \cdots (1)$$

Subsequently, a first threshold value qJUDH is calculated using the threshold value qJUD calculated in the step 13 by the following equation (2) (step 14):

$$qJUDH = (qJUD + DH)B1 \qquad \cdots (2)$$

wherein DH represents a predetermined addition term, and B1 represents a predetermined coefficient. Accordingly, the first threshold value qJUDH is calculated to be a value larger than the threshold value qJUD by a predetermined amount.

Next, a second threshold value qJUDL is calculated using the threshold value qJUD calculated in the step 13 by the following equation (3) (step 15):

$$qJUDL = (qJUD - DL)B2 \qquad \cdots (3)$$

wherein DL represents a predetermined subtraction term, and B2 represents a predetermined coefficient. Accordingly, the second threshold value qJUDL is calculated to be a value smaller than the threshold value qJUD by a predetermined amount.

Then, an injection amount parameter qf is calculated based on the calculated target fuel injection amount QOUT (step 16). More specifically, the injection amount parameter qf is calculated by weighted averaging of the current value of the target fuel injection amount QOUT calculated this time and a predetermined number of past values of the target fuel injection amount QOUT which have been calculated and stored for a predetermined number of injections except the injection to be executed this time. Next, it is determined whether or not the injection amount parameter of calculated in the step 16 is not more than the first threshold value qJUDH calculated in the step 14, and at the same time is not less than the second threshold value qJUDL calculated in the step 15 (step 17).

If the answer to the question of the step 17 is negative (NO), i.e. if the injection amount parameter qf is not within a predetermined range defined by the first and second threshold values qJUDH and qJUDL (hereinafter referred to as "the predetermined range"), the counter value COK of the above-mentioned OK counter is reset to the predetermined value COK (step 18). Then, the counter value CNG of the NG counter, set in the step 2, is decremented (step 19), and it is determined whether or not the counter value CNG is equal to 0 (step 20).

If the answer to the question of the step 20 is negative (NO), the present process is immediately terminated, whereas if the answer to the question of the step 20 is affirmative (YES), i.e. if a state where the injection amount parameter qf is not within the above-mentioned predetermined range occurs a number of times corresponding to the predetermined value CNGE during the idling operation, it is judged that a state where the target fuel injection amount QOUT is too large or too small is positively occurring, so that it is determined that the idling control system is abnormal, and to indicate this fact, an abnormality flag F_IDNG is set to 1 (step 21). Then, to indicate that the result of abnormality determination has been obtained during the current idling, the above-mentioned determination completion flag F_Monend is set to 1 (step 22), followed by terminating the present process.

The reason for determining abnormality of the idling control system in the manner described above is: When the engine is performing the idling operation, the target fuel injection amount QOUT is calculated such that the engine speed NE becomes equal to the idle speed as mentioned above. However, if the fuel injection amount becomes too small or too large with respect to the target fuel injection amount QOUT due to abnormality of the injector 6, if the fresh air amount QA becomes too small or too large due to abnormality of the throttle valve 7, the actuator 7a, the EGR device 8 or the like, or if the load on the engine 3 becomes too large or too small due to abnormality of any accessary connected to the crankshaft 3a, the target fuel injection amount QOUT calculated as above becomes too large or too small due to such a cause, so that it is out of the predetermined range. Further, the reason for using the injection amount parameter gf, which is a moving average value, for the abnormality determination, instead of directly using the target fuel injection amount QOUT is to prevent erroneous determination due to fluctuation of the target fuel injection amount QOUT caused by a temporary disturbance to the idling control system.

Further, the above-mentioned addition term DH, coefficient B1, subtraction term DL, and coefficient B2, for calculating the first and second threshold values qJUDH and qJUDL are so configured as to be capable of compensating for influence of variations in characteristics of the various sensors for detecting various values used for calculation of the threshold value qJUD, on the threshold value qJUD.

On the other hand, if the answer to the question of the step 17 is affirmative (YES), i.e. if the injection amount parameter qf is within the predetermined range, the counter value COK of the OK counter, which is reset in the step 2 or the step 18, is decremented (step 23), and it is determined whether or not the counter value COK is equal to 0 (step 24). If the answer to the question of the step 24 is negative (NO), the present process is immediately terminated, whereas if the answer to the question of the step 24 is affirmative (YES), i.e. if the state where the injection amount parameter qf is within the predetermined range has continued for a predetermined time period corresponding to the predetermined value COK, it is determined that the idling control system is normal, and to indicate this fact, the abnormality flag F_IDNG is set to 0 (step 25), and the step 22 is executed, followed by terminating the present process.

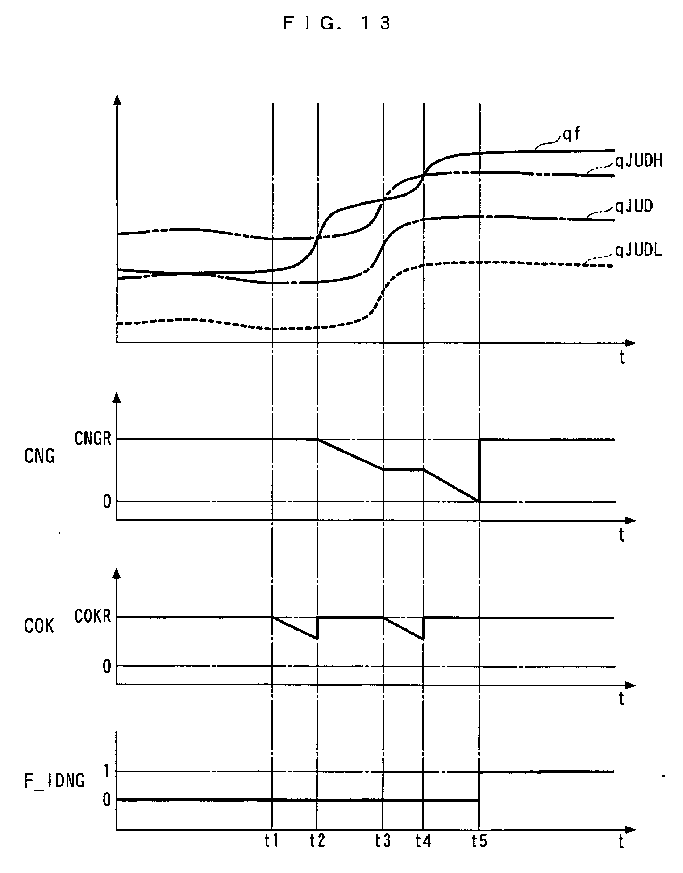

FIG. 13 shows an example of the operation of the above-described abnormality-determining device 1. The figure shows a case where the idling control system suffers from abnormality that the injection amount parameter qf exceeds the predetermined range during execution of the above-described abnormality determination.

After the conditions of the steps 3 and 4 are satisfied and the abnormality determination in the steps 5 to 25 is started (after a time point t1), when the injection amount parameter qf is within the range defined by the first and second threshold values qJUDH and qJUDL (YES to the step 17), the counter value COK of the OK counter is decremented (step 23). Then, when the injection amount parameter qf temporarily increases due to a disturbance to the idling control system, and then is out of the predetermined range (NO to the step 17) (time point t2), the counter value COK is reset to the predetermined value COKR (step 18), and the counter value CNG of the NG counter is decremented (step 19).

Then, when the injection amount parameter qf falls within the predetermined range again (time point t3), the counter value CNG of the NG counter is not reset but held, and the counter value COK of the OK counter is decremented again. Thereafter, if the idling control system suffers abnormality, whereby the injection amount parameter qf increases and is out of the predetermined range again (time point t4), the counter value COK of the OK counter is reset, and at the same time the counter value CNG of the NG counter is decremented again. Then, when the counter value CNG becomes equal to 0 (YES to the step 20, time point t5), the abnormality flag F_IDNG is set to 1 (step 21), so that it is determined that the idling control system is abnormal.

As described above, according to the present embodiment, when the injection amount parameter qf, which is the moving average value of the target fuel injection amount QOUT, is not within the predetermined range defined by the first and second threshold values qJUDH and qJUDL during idling, it is determined that the idling control system is abnormal. Therefore, it is possible to determine abnormality of the idling control system, while preventing erroneous determination due to fluctuation of the target fuel injection amount QOUT caused by variations in characteristics of the various sensors, such as the current sensor 21 and the engine coolant temperature sensor 24, or a temporary disturbance to the idling control system. Further, the first and second threshold values qJUDH and qJUDL are set according to the combustion state parameters indicative of the combustion state of the engine 3, such as the EGR ratio rEGR detected during the idling operation, and the load parameters indicative of load on the engine 3, such as the generated current VEL. Therefore, it is possible to determine the abnormality of the idling control system with high accuracy according to changes in the operation state of the engine 3 during the idling operation.

Further, since the EGR ratio rEGR, the engine coolant temperature TW, and the atmospheric pressure PA are employed as the combustion state parameters, it is possible to properly perform setting of the first and second threshold values qJUDH and qJUDL. Further, the generated current VEL is employed as a parameter indicative of load on the engine 3 caused by the alternator AL, the intake air temperature TA is employed as a parameter indicative of load on the engine 3 caused by the air conditioner AC, the engine coolant temperature TW is employed as a parameter indicative of load on the engine 3 caused by the transmission TM, and the pump oil pressure PO is employed as a parameter indicative of load on the engine 3 caused by the power steering unit PS, respectively. Therefore, it is possible to more properly set the first and second threshold values qJUDH and qJUDL.

Further, when it is confirmed that the state where the injection amount parameter qf is not within the predetermined range has occurred a number of times corresponding to the predetermined value CNG, it is determined that the idling control system is abnormal, and it is determined that the idling control system is normal after the state where the injection amount parameter qf is within the predetermined range has continued for a predetermined time period corresponding to the predetermined value COK. Therefore, it is possible to more strictly carry out determination of normality of the idling control system.

It should be noted that the present invention is by no means limited to the above-described embodiment, but it can be practiced in various forms. For example, although in the present embodiment, all of the EGR ratio rEGR, the engine coolant temperature TW, and the atmospheric pressure PA are employed as the combustion state parameters in the present invention, a desired one or two out of the parameters rEGR, TW, and PA can be employed. Further, instead of the parameters rEGR, TW, and PA, or together with these parameters, other parameters indicative of the combustion state of the engine 3, e.g. pressure in the cylinder 3d during the expansion stroke of the engine 3, temperature of exhaust gases exhausted from the engine 3, or the like, can be employed.

Further, although in the present embodiment, all of the generated current VEL, the intake air temperature TA, the engine coolant temperature TN, and the pump oil pressure PO are employed a the load parameters, a desired one to three of these parameters VEL, TA, TW, and PO can be employed. In addition, instead of the parameters VEL, TA, TW, and PO, or together with these parameters, other parameters indicative of load on the engine 3, e.g. an output torque of the crankshaft 3a can be employed. Further, instead of the intake air temperature TA, the ambient air temperature can be employed.

Further, although in the present embodiment, the threshold value qJUD is calculated according to both of the combustion state parameters including the EGR ratio rEGR, and the load parameters including the generated current VEL, the threshold value qJUD may be calculated according to one of the two kinds of parameters. Further, although in the present embodiment, the injection amount parameter gf and the predetermined range are employed for the abnormality determination, the target fuel injection amount QOUT can be directly employed, or the threshold value qJUD can be directly employed.

Further, although in the present embodiment, the EGR ratio rEGR, which is the ratio of the target EGR gas amount to the sum of the fresh air amount QA and the target EGR gas amount, is employed as the EGR ratio parameter in the present invention, any other parameter, e.g. the ratio of the fresh air amount QA to the sum of the fresh air amount QA and the target EGR gas amount can be employed, insofar as it is a parameter which represents a ratio of the EGR gas amount to the sum of the fresh air amount QA and the EGR gas amount. Further, instead of the target EGR gas amount, an actual EGR gas amount can be employed, and in this case, the actual EGR gas amount is calculated (estimated) based on the valve lift amount of the EGR control valve 8b.

Further, although in the present embodiment, the parameter indicative of load on the engine 3 caused by the alternator AL, and the parameter indicative of load on the engine 3 caused by the air conditioner AC are the generated current VEL and the intake air temperature TA, respectively, they may be a torque transmitted from the engine 3 to the alternator AL, and a torque transmitted from the engine 3 to the compressor CO. Further, although in the present embodiment, the parameter indicative of load on the engine 3 caused by the transmission TM, and the parameter indicative of load on the engine 3 caused by the power steering unit PS are the engine coolant temperature TW and the pump oil pressure OP, respectively, they may be a torque transmitted from the engine 3 to the transmission TM, and a torque transmitted from the engine 3 to the oil pressure pump OP. Further, although in the present embodiment, the predetermined range including the threshold value is defined by the first and second threshold values qJUDH and qJUDL, the predetermined range may be defined by the threshold value qJUD and the first threshold value qJUDH, or by the threshold value qJUD and the second threshold value qJUDL.

Further, although in the present embodiment, the EGR device 8 of a so-called external EGR type is employed, it is to be understood that an EGR device of a so-called internal EGR type which causes burned gases to remain in a cylinder by the control of opening and closing timings of an intake valve and those of an exhaust valve of the engine can be employed. Further, it is to be understood that the present invention can be applied to an engine which is not provided with an EGR device. Further, although in the present embodiment, the stepped transmission TM is employed, a stepless transmission may be employed. In this case, load on the engine caused by the transmission is calculated to be a larger value as the degree of creeping of the transmission is larger. As the torque transmitted from the engine to the drive wheels of the vehicle for creeping is larger, the degree of creeping becomes larger, and is calculated according to the engine speed and the transmission ratio of the transmission.

Further, although in the present embodiment, both of the idling control and the abnormality determination are carried out by using the ECU 2, which is single, the processes for them may be performed by using respective separate ECUs. In this case, an ECU for performing control of the idling operation can be included in objects on which the abnormality determination is to be carried out, in addition to the injector 6, etc. in the present embodiment. Furthermore, although in the above-described embodiment, the present invention is applied to the engine 3 which is the diesel engine, this is not limitative, but it can be applied to various engines other than a diesel engine, e.g. a gasoline engine, and engines for ship propulsion machines, such as an outboard motor having a vertically-disposed crankshaft. Further, it is possible to modify the configuration of details of the embodiment within the scope of the present invention.

[Industrial Applicability]

The abnormality-determining device for an idling control system according to the present invention is very useful in determining abnormality of the idling control system that controls an idling operation of an internal combustion engine, with high accuracy.

**Claims**

1. An abnormality-determining device for determining abnormality of an idling control system (6, 7, 7a, 8) that determines a fuel supply amount of fuel (qf) to be supplied to an internal combustion engine (3) such that an operation state of the engine (3) becomes a predetermined idling operation state, and controls an idling operation of the engine (3) based on the determined fuel supply amount (qf), comprising:

   idling operation-determining means (2, 29, 30) for determining whether or not the engine (3) is in the predetermined idling operation state;
   parameter detecting means (2, 21, 22, 24, 25, 26, 27) for detecting at least one of a combustion state parameter (qBASE, Kpa, Kegr) indicative of a combustion state of the engine (3) and a load parameter (qEL, qAC, qAT, qPS) indicative of load on the engine (3);
   threshold value-determining means (2) for determining a threshold value (qJUDH, qJUDL) for determining abnormality of the idling control system (6, 7, 7a, 8) based on at least one of the combustion state parameter (qBASE, Kpa, Kegr) and the load parameter (qEL, qAC, qAT, qPS) which are detected when the engine (3) is in the predetermined idling operation state;
   fuel supply amount-acquiring means (2) for acquiring the fuel supply amount (qf);
   an OK counter for counting a state where the acquired fuel supply amount (qf) is within a predetermined range (qJUDL s qf ≤ qJUDH) including the determined threshold value (qJUDH, qJUDL);
an NG counter for counting a state where the fuel supply amount (qf) is not within the predetermined range; and
abnormality determining means (2) for determining that the idling control system (6, 7, 7a, 8) is normal when a counter value of said OK counter reaches a first predetermined value (COK), and determining that the idling control system (6, 7, 7a, 8) is abnormal when a counter value of said NG counter reaches a second predetermined value (CNG),

wherein the counter value of said OK counter is reset if the fuel supply amount (qf) is not within the predetermined range (qJUDL ≤ qf ≤ qJUDH), and the counter value of said NG counter is not reset even if the fuel supply amount is within the predetermined range.

2. The abnormality-determining device as claimed in claim 1, wherein the engine (3) is provided with an EGR device (8) which causes part of burned gases generated by combustion in the engine (3) to exist in a cylinder (3d) of the engine (3), and
wherein the combustion state parameter (qBASE, Kpa, Kegr) includes at least one of an EGR ratio parameter indicative of a ratio of an amount of burned gases caused to exist in the cylinder (3d) by the EGR device (8) to a sum of an amount of fresh air drawn into the cylinder (3d) and the amount of the burned gases, a temperature of engine coolant for cooling the engine (3), and atmospheric pressure.

3. The abnormality-determining device as claimed in claim 1 or 2, wherein at least one of a generator (AL), an air conditioner (AC), a transmission (TM), and a power steering unit (PS) is connected to the engine (3), and
wherein the load parameter (qEL, qAC, qAT, qPS) includes a parameter indicative of load caused by at least one of the generator (AL), the air conditioner (AC), the transmission (TM), and the power steering unit (PS).

4. An abnormality-determining method for determining abnormality of an idling control system (6, 7, 7a, 8) that determines a fuel supply amount of fuel (qf) to be supplied to an internal combustion engine (3) such that an operation state of the engine (3) becomes a predetermined idling operation state, and controls an idling operation of the engine (3) based on the determined fuel supply amount (qf), comprising:

a step (S3) of determining whether or not the engine (3) is in the predetermined idling operation state;
a step (S7, S9) of detecting at least one of a combustion state parameter (qBASE, Kpa, Kegr) indicative of a combustion state of the engine (3) and a load parameter (qEL, qAC, qAT, qPS) indicative of load on the engine (3);
a step (S13) of determining a threshold value (qJUDH, qJUDL) for determining abnormality of the idling control system (6, 7, 7a, 8) based on at least - one of the combustion state parameter (qBASE, Kpa, Kegr) and the load parameter (qEL, qAC, qAT, qPS) which are detected when the engine (3) is in the predetermined idling operation state;
a step (S16) of acquiring the fuel supply amount (qf);
an OK counting step of counting a state where the acquired fuel supply amount (qf) is within a predetermined range (qJUDL ≤ qf ≤ qJUDH) including the determined threshold value (qJUDH, qJUDL);
a NG counting step of counting a state where the fuel supply amount (qf) is not within the predetermined range; and
a step (S17) of determining that the idling control system (6, 7, 7a, 8) is normal when a counter value of said OK counting step reaches a first predetermined value (COK), and determining that the idling control system (6, 7, 7a, 8) is abnormal when a counting value of said NG counting step reaches a second predetermined value (CNG),

wherein the counter value of said OK counting step is reset if the fuel supply amount (qf) is not within the predetermined range (qJUDL ≤ qf ≤ qJUDH), and the counter value of said NG counting step is not reset even if the fuel supply amount is within the predetermined range.

5. The abnormality-determining method as claimed in claim 4, wherein the engine (3) is provided with an EGR device (8) which causes part of burned gases generated by combustion in the engine (3) to exist in a cylinder (3d) of the engine (3), and
wherein the combustion state parameter (qBASE, Kpa, Kegr) includes at least one of an EGR ratio parameter indicative of a ratio of an amount of burned gases caused to exist in the cylinder (3d) by the EGR (8) device to a sum of an amount of fresh air drawn into the cylinder (3d) and the amount of the burned gases, a temperature of engine coolant for cooling the engine (3), and atmospheric pressure.

6. The abnormality-determining method as claimed in claim 4 or 5 wherein at least one of a generator (AL), an air conditioner (AC), a transmission (TM), and a power steering unit (PS) is connected to the engine (3), and wherein the load parameter (qEL, qAC, qAT, qPS) includes a parameter

- indicative of load caused by at least one of the generator (AL), the air conditioner (AC), the transmission (TM), and the power steering unit (PS).

**Patentansprüche**

1. Abnormalitätsbestimmungsvorrichtung zum Bestimmen einer Abnormalität eines Leerlaufregelungssystems (6, 7, 7a, 8), das eine einem Verbrennungsmotor (3) zuzuführende Kraftstoffzufuhrmenge (qf) derart bestimmt, dass ein Betriebszustand des Motors (3) ein vorbestimmter Leerlaufbetriebszustand wird, und einen Leerlaufbetrieb des Motors (3) basierend auf der bestimmten Kraftstoffzufuhrmenge (qf) regelt, umfassend:

ein Leerlaufbetriebsbestimmungsmittel (2, 29, 30) zum Bestimmen, ob der Motor (3) in dem vorbestimmten Leerlaufbetriebszustand ist oder nicht;
ein Parametererfassungsmittel (2, 21, 22, 24, 25, 26, 27) zum Erfassen eines Verbrennungszustandparameters (qBASE, Kpa, Kegr), der einen Verbrennungszustand des Motors (3) angibt, und/oder eines Lastparameters (qEL, qAC, qAT, qPS), der eine Last an dem Motor (3) angibt;
ein Schwellenwertbestimmungsmittel (2) zum Bestimmen eines Schwellwerts (qJUDH, qJUDL) zum Bestimmen einer Abnormalität des Leerlaufregelungssystems (6, 7, 7a, 8) basierend auf dem Verbrennungszustandparameter (qBASE, Kpa, Kegr) und/oder dem Lastparameter (qEL, qAC, qAT, qPS), die erfasst werden, wenn der Motor (3) in dem vorbestimmten Leerlaufbetriebszustand ist;
ein Kraftstoffzufuhrmengenerfassungsmittel (2) zum Erfassen der Kraftstoffzufuhrmenge (qf);
einen OK-Zähler zum Zählen eines Zustands, wo die erfasste Kraftstoffzufuhrmenge (qf) innerhalb eines vorbestimmten Bereichs (qJUDL ≤ qf ≤ qJUDH) liegt, der den besrtimmten Schwellenwert (qJUDH, qJUDL) enthält;
einen NG-Zähler zum Zählen eines Zustands, wo die Kraftstoffzufuhrmenge (qf) nicht innerhalb des vorbestimmten Bereichs - liegt; und
ein Abnormalitätsbestimmungsmittel (2) zum Bestimmen, dass das Leerlaufregelungssystem (6, 7, 7a, 8) normal ist, wenn ein Zählwert des OK-Zählers einen ersten vorbestimmten Wert (COK) erreicht, und Bestimmen, dass das Leerlaufregelungssystem (6, 7, 7a, 8) abnormal ist, wenn ein Zählwert des NG-Zählers einen zweiten vorbestimmten Wert (CNG) erreicht, worin der Zählwert des OK-Zählers rückgesetzt wird, wenn die Kraftstoffzufuhrmenge (qf) nicht innerhalb des vorbestimmten Bereichs (qJUDL ≤ qf ≤ qJUDH) liegt, und der Zählwert des NG-Zählers nicht rückgesetzt wird, auch wenn die Kraftstoffzufuhrmenge innerhalb des vorbestimmten Bereichs liegt.

2. Die Abnormalitätsbestimmungsvorrichtung nach Anspruch 1, worin der Motor (3) mit einer AGR-Vorrichtung (8) versehen ist, die bewirkt, dass ein Teil der durch Verbrennung des Motors (3) erzeugten Brenngase in einem Zylinder (3d) des Motors (3) vorhanden ist, und worin der Verbrennungszustandparameter (qBASE, Kpa, Kegr) einen AGR-Verhältnisparameter, der ein Verhältnis einer Menge von Brenngasen, die durch die AGR-Vorrichtung (8) in dem Zylinder (3d) vorhanden sind, zu einer Summe einer Frischluftmenge, die in den Zylinder (3d) gesaugt wird, und der Menge der Brenngase, und/oder eine Temperatur von Motorkühlmittel zum Kühlen des Motors (3) und/oder Atmosphärendruck enthält.

3. Die Abnormalitätsbestimmungsvorrichtung nach Anspruch 1 oder 2, worin ein Generator (AL) und/oder eine Klimaanlage (AC) und/oder ein Getriebe (TM) und/oder eine Servolenkeinheit (PS) mit dem Motor (3) verbunden ist/sind; und worin der Lastparameter (qEL, qAC, qAT, qPS) einen Parameter enthält, der eine Last angibt, die durch den Generator (AL) und/oder die Klimaanlage (AC) und/oder das Getriebe (TM) und/oder die Servorienkeinheit (PS) verursacht wird.

4. Abnormalitätsbestimmungsverfahren zum Bestimmen einer Abnormalität eines Leerlaufregelungssystems (6, 7, 7a, 8), das eine einem Verbrennungsmotor (3) zuzuführende Kraftstoffzufuhrmenge (qf) derart bestimmt, dass ein Betriebszustand des Motors (3) ein vorbestimmter Leerlaufbetriebszustand wird, und einen Leerlaufbetrieb des Motors (3) basierend auf der bestimmten Kraftstoffzufuhrmenge (qf) regelt, umfassend:

einen Schritt (S3) zum Bestimmen, ob der Motor (3) in dem vorbestimmten Leerlaufbetriebszustand ist oder nicht;

einen Schritt (S7, S9) zum Erfassen eines Verbrennungszustandparameters (qBASE, Kpa, Kegr), der einen Verbrennungszustand des Motors (3) angibt, und/oder eines Lastparameters (qEL, qAC, qAT, qPS), der eine Last an dem Motor (3) angibt;

einen Schritt (S13) zum Bestimmen eines Schwellwerts (qJUDH, qJUDL) zum Bestimmen einer Abnormalität des Leerlaufregelungssystems (6, 7, 7a, 8) basierend auf dem Verbrennungszustandparameter (qBASE, Kpa, Kegr) und/oder dem Lastparameter (qEL, qAC, qAT, qPS), die erfasst werden, wenn der Motor (3) in dem vorbestimmten Leerlaufbetriebszustand ist;

einen Schritt (S16) zum Erfassen der Kraftstoffzufuhrmenge (qf);

einen OK-Zähl-Schritt zum Zählen eines Zustands, wo die erfasste Kraftstoffzufuhrmenge (qf) innerhalb eines vorbestimmten Bereichs (qJUDL ≤ qf ≤ qJUDH) liegt, der den bestimmten Schwellenwert (qJUDH, qJUDL) enthält;

einen NG-Zähl-Schritt zum Zählen eines Zustands, wo die Kraftstoffzufuhrmenge (qf) nicht innerhalb des vorbestimmten Bereichs liegt; und

einen Schritt (S17) zum Bestimmen, dass das Leerlaufregelungssystem (6, 7, 7a, 8) normal ist, wenn ein Zählwert des OK-Zählers einen ersten vorbestimmten Wert (COK) erreicht, und Bestimmen, dass das Leerlaufregelungssystem (6, 7, 7a, 8) abnormal ist, wenn ein Zählwert des NG-Zählers einen zweiten vorbestimmten Wert (CNG) erreicht, worin der Zählwert des OK-Zählers rückgesetzt wird, wenn die Kraftstoffzufuhrmenge (qf) nicht innerhalb des vorbestimmten Bereichs (qJUDL ≤ qf ≤ qJUDH) liegt, und der Zählwert des NG-Zählers nicht rückgesetzt wird, auch wenn die Kraftstoffzufuhrmenge innerhalb des vorbestimmten Bereichs liegt.

5. Das Abnormalitätsbestimmungsverfahren nach Anspruch 4, worin der Motor (3) mit einer AGR-Vorrichtung (8) versehen ist, die bewirkt, dass ein Teil der durch Verbrennung des Motors (3) erzeugten Brenngase in einem Zylinder (3d) des Motors (3) vorhanden ist, und

worin der Verbrennungszustandparameter (qBASE, Kpa, Kegr) einen AGR-Verhältnisparameter, der ein Verhältnis einer Menge von Brenngasen, die durch die AGR-Vorrichtung (8) in dem Zylinder (3d) vorhanden sind, zu einer Summe einer Frischluftmenge, die in den Zylinder (3d) gesaugt wird, und der Menge der Brenngase, und/oder eine Temperatur von Motorkühlmittel zum Kühlen des Motors (3) und/oder Atmosphärendruck enthält.

6. Das Abnormalitätsbestimmungsverfahren nach Anspruch 4 oder 5, worin ein Generator (AL) und/oder eine Klimaanlage (AC) und/oder ein Getriebe (TM) und/oder eine Servolenkeinheit (PS) mit dem Motor (3) verbunden ist/sind; und

worin der Lastparameter (qEL, qAC, qAT, qPS) einen Parameter enthält, der eine Last angibt, die durch den Generator (AL) und/oder die Klimaanlage (AC) und/oder das Getriebe (TM) und/oder die Servolenkeinheit (PS) verursacht wird.

**Revendications**

1. Dispositif de détermination d'une anomalie pour déterminer une anomalie d'un système de commande de ralenti (6, 7,7a, 8) qui détermine une quantité de fourniture de carburant d'un carburant (qf) à fournir à un moteur à combustion interne (3), de telle sorte qu'un état de marche du moteur (3) devienne un état de marche au ralenti prédéterminé, et commande une marche au ralenti du moteur (3) sur la base de la quantité de fourniture de carburant déterminée (qf), comprenant:

des moyens de détermination de marche au ralenti (2, 29, 30) pour déterminer si le moteur (3) se trouve ou ne se trouve pas dans l'état de marche au ralenti prédéterminé;

des moyens de détection de paramètre (2, 21, 22, 24, 25, 26, 27) pour détecter au moins un paramètre parmi un paramètre d'état de combustion (qBASE, Kpa, Kegr), qui est indicatif d'un état de combustion du moteur (3), et un paramètre de charge (qEL, qAC, qAT, qPS) qui est indicatif de la charge exercée sur le moteur (3);

des moyens de détermination de valeur de seuil (2) pour déterminer une valeur de seuil (qJUDH, qJUDL) pour déterminer une anomalie du système de commande de ralenti (6, 7, 7a, 8) sur la base d'au moins un paramètre parmi le paramètre d'état de combustion (qBASE, Kpa, Kegr) et le paramètre de charge (qEL, qAC, qAT, qPS) qui sont détectés lorsque le moteur (3) se trouve dans l'état de marche au ralenti prédéterminé;

des moyens d'acquisition de quantité de fourniture de carburant (2) pour acquérir la quantité de fourniture de carburant (qf);

un compteur OK pour compter un état dans lequel la quantité de fourniture de carburant acquise (qf) se trouve à l'intérieur d'une plage prédéterminée (qJUDL ≤ qf ≤ qJUDH) qui inclut la valeur de seuil déterminée (qJUDH, qJUDL);

un compteur NG pour compter un état dans lequel la quantité de fourniture de carburant (qf) ne se trouve pas à l'intérieur de la plage prédéterminée; et

des moyens de détermination d'une anomalie (2) pour déterminer que le système de commande de ralenti (6, 7, 7a, 8) est normal lorsqu'une valeur de compteur dudit compteur OK atteint une première valeur prédéterminée (COK), et pour déterminer que le système de commande de ralenti (6, 7, 7a, 8) est anormal lorsqu'une valeur de compteur dudit compteur NG atteint une deuxième valeur prédéterminée (CNG),

dans lequel la valeur de compteur dudit compteur OK est réinitialisée si la quantité de fourniture de carburant (qf) ne se trouve pas à l'intérieur de la plage prédéterminée (qJUDL ≤ qf ≤ qJUDH), et la valeur de compteur dudit compteur NG n'est pas réinitialisée même si la quantité de fourniture de carburant se trouve à l'intérieur de la plage prédéterminée.

2. Dispositif de détermination d'une anomalie selon la revendication 1, dans lequel le moteur (3) est équipé d'un dispositif EGR (8) qui entraîne une partie des gaz brûlés générés par la combustion dans le moteur (3) à résider dans un cylindre (3d) du moteur (3), et

dans lequel le paramètre d'état de combustion (qBASE, Kpa, Kegr) comprend au moins soit un paramètre de rapport EGR qui est indicatif d'un rapport entre une quantité de gaz brûlés entraînés à résider dans le cylindre (3d) par le dispositif EGR (8) et une somme d'une quantité d'air frais aspirée dans le cylindre (3d) et de la quantité des gaz brûlés, soit une température d'un agent de refroidissement de moteur pour refroidir le moteur (3), soit la pression atmosphérique.

3. Dispositif de détermination d'une anomalie selon la revendication 1 ou 2, dans lequel au moins soit un générateur (AL), soit un appareil de conditionnement d'air (AC), soit une transmission (TM), soit une unité de servo-direction (PS) est connecté(e) au moteur (3), et

dans lequel le paramètre de charge (qEL, qAC, qAT, qPS) comprend un paramètre qui est indicatif d'une charge provoquée par au moins soit le générateur (AL), soit l'appareil de conditionnement d'air (AC), soit la transmission (TM), soit l'unité de servo-direction (PS).

4. Procédé de détermination d'une anomalie pour déterminer une anomalie d'un système de commande de ralenti (6, 7, 7a, 8) qui détermine une quantité de fourniture de carburant (qf) à fournir à un moteur à combustion interne (3), de telle sorte qu'un état de marche du moteur (3) devienne un état de marche au ralenti prédéterminé, et commande une marche au ralenti du moteur (3) sur la base de la quantité de fourniture de carburant déterminée (qf), comprenant:

une étape (S3) pour déterminer si le moteur (3) se trouve ou ne se trouve pas dans l'état de marche au ralenti prédéterminé;
une étape (S7, S9) de détection d'au moins un paramètre parmi un paramètre d'état de combustion (qBASE, Kpa, Kegr), qui est indicatif d'un état de combustion du moteur (3), et un paramètre de charge (qEL, qAC, qAT, qPS) qui est indicatif de la charge exercée sur le moteur (3);
une étape (S13) de détermination d'une valeur de seuil (qJUDH, qJUDL) pour déterminer une anomalie du système de commande de ralenti (6, 7, 7a, 8) sur la base d'au moins un paramètre parmi le paramètre d'état de combustion (qBASE, Kpa, Kegr) et le paramètre de charge (qEL, qAC, qAT, qPS) qui sont détectés lorsque le moteur (3) se trouve dans l'état de marche au ralenti prédéterminé;
une étape (S16) d'acquisition de la quantité de fourniture de carburant (qf);
une étape de comptage OK pour compter un état dans lequel la quantité de fourniture de carburant acquise (qf) se trouve à l'intérieur d'une plage prédéterminée (qJUDL ≤ qf ≤ qJUDH) qui inclut la valeur de seuil déterminée (qJUDH, qJUDL);
une étape de comptage NG pour compter un état dans lequel la quantité de fourniture de carburant (qf) ne se trouve pas à l'intérieur de la plage prédéterminée; et
une étape (S17) pour déterminer que le système de commande de ralenti (6, 7, 7a, 8) est normal lorsqu'une valeur de compteur dudit compteur OK atteint une première valeur prédéterminée (COK), et pour déterminer que le système de commande de ralenti (6, 7, 7a, 8) est anormal lorsqu'une valeur de compteur dudit compteur NG atteint une deuxième valeur prédéterminée (CNG),

dans lequel la valeur de compteur dudit compteur OK est réinitialisée si la quantité de fourniture de carburant (qf) ne se trouve pas à l'intérieur de la plage prédéterminée (qJUDL ≤ qf ≤ qJUDH), et la valeur de compteur dudit compteur NG n'est pas réinitialisée même si la quantité de fourniture de carburant se trouve à l'intérieur de la plage prédéterminée.

5. Procédé de détermination d'une anomalie selon la revendication 4, dans lequel le moteur (3) est équipé d'un dispositif EGR (8) qui entraîne une partie des gaz brûlés générés par la combustion dans le moteur (3) à résider dans un cylindre (3d) du moteur (3), et

dans lequel le paramètre d'état de combustion (qBASE, Kpa, Kegr) comprend au moins soit un paramètre de rapport EGR qui est indicatif d'un rapport entre une quantité de gaz brûlés entraînés à résider dans le cylindre (3d) par le dispositif EGR (8) et une somme d'une quantité d'air frais aspirée dans le cylindre (3d) et de la quantité des gaz brûlés, soit une température d'un agent de refroidissement de moteur pour refroidir le moteur (3), soit la pression atmosphérique.

6. Procédé de détermination d'une anomalie selon la revendication 4 ou 5, dans lequel au moins soit un générateur (AL), soit un appareil de conditionnement d'air (AC), soit une transmission (TM), soit une unité de servo-direction (PS) est connecté(e) au moteur (3), et

dans lequel le paramètre de charge (qEL, qAC, qAT, qPS) comprend un paramètre qui est indicatif d'une charge provoquée par au moins soit le générateur (AL), soit l'appareil de conditionnement d'air (AC), soit la transmission (TM), soit l'unité de servo-direction (PS).

EP 2 305 989 B1

F I G. 2

F I G. 3

FIG. 4

```
        ┌──────────────────┐
        │   ABNORMALITY    │
        │  DETERMINATION   │
        └──────────────────┘
                 │
                 ▼           S1
            ╱─────────────╲    YES
           ╱ F_Monend=1 ? ╲──────────────────────┐
            ╲─────────────╱                       │
                 │ NO                             │
                 ▼           S3                    │
            ╱───────────────────╲   NO             │
           ╱ IN IDLING OPERATION ?╲─────────────┐  │
            ╲───────────────────╱               │  │
                 │ YES                          │  │
                 ▼           S4                  │  │
            ╱───────────────────╲   NO           │  │
           ╱  WARM-UP OPERATION  ╲───────────┐   │  │
           ╲     COMPLETED ?     ╱           │   │  │
            ╲───────────────────╱            ▼   ▼  │
                 │ YES                    ┌──────────────┐  S2
                 ▼           S5           │  COK ← COKR  │
        ┌──────────────────┐             │  CNG ← CNGR  │
        │  CALCULATE qBASE │             └──────────────┘
        │ ACCORDING TO NE,TW│                   │
        └──────────────────┘                   ▼
                 │           S6           ┌──────────┐
                 ▼                        │   END    │
        ┌──────────────────┐             └──────────┘
        │   CALCULATE Kpa  │
        │  ACCORDING TO PA │
        └──────────────────┘
                 │           S7
                 ▼
        ┌──────────────────┐
        │  CALCULATE rEGR  │
        └──────────────────┘
                 │           S8
                 ▼
        ┌──────────────────┐
        │  CALCULATE Kegr  │
        │ ACCORDING TO rEGR│
        └──────────────────┘
                 │           S9
                 ▼
        ┌──────────────────┐
        │   CALCULATE qEL  │
        │ ACCORDING TO VEL │
        └──────────────────┘
                 │           S10
                 ▼
        ┌──────────────────┐
        │   CALCULATE qAC  │
        │ ACCORDING TO TA  │
        └──────────────────┘
                 │           S11
                 ▼
        ┌──────────────────┐
        │   CALCULATE qAT  │
        │ ACCORDING TO TW  │
        └──────────────────┘
                 │           S12
                 ▼
        ┌──────────────────┐
        │   CALCULATE qPS  │
        │ ACCORDING TO PO  │
        └──────────────────┘
                 │
                 ▼
                (A)
```

F I G. 5

```
                    (A)
                     │
                     ▼         ╭S13
          ┌─────────────────────┐
          │  CALCULATE qJUD     │
          └─────────────────────┘
                     │
                     ▼         ╭S14
          ┌─────────────────────┐
          │  CALCULATE qJUDH    │
          └─────────────────────┘
                     │
                     ▼         ╭S15
          ┌─────────────────────┐
          │  CALCULATE qJUDL    │
          └─────────────────────┘
                     │
                     ▼         ╭S16
          ┌─────────────────────┐
          │  CALCULATE qf       │
          │  BASED ON QOUT      │
          └─────────────────────┘
                     │
                     ▼         ╭S17
          ╱─────────────────────╲  YES
         ⟨ qJUDL≦qf≦qJUDH ? ⟩──────────────┐
          ╲─────────────────────╱          │
                     │ NO                   │
                     ▼         ╭S18         │
          ┌─────────────────────┐          │
          │  COK ← COKR         │          │
          └─────────────────────┘          │
                     │                      │
                     ▼         ╭S19         ▼         ╭S23
          ┌─────────────────────┐  ┌─────────────────────┐
          │  DECREMENT CNG      │  │  DECREMENT COK      │
          └─────────────────────┘  └─────────────────────┘
                     │                      │
         NO          ▼         ╭S20         ▼         ╭S24  NO
     ┌──────⟨   CNG = 0 ?   ⟩    ⟨   COK = 0 ?   ⟩──────┐
     │      ╲───────────────╱    ╲───────────────╱      │
     │             │ YES                │ YES           │
     │             ▼         ╭S21       ▼      ╭S25      │
     │  ┌─────────────────────┐  ┌─────────────────────┐ │
     │  │  F_IDNG ← 1         │  │  F_IDNG ← 0         │ │
     │  └─────────────────────┘  └─────────────────────┘ │
     │             │                    │                │
     │             ▼◄───────────────────┘                │
     │             │         ╭S22                         │
     │  ┌─────────────────────┐                          │
     │  │  F_Monend ← 1       │                          │
     │  └─────────────────────┘                          │
     │             │                                      │
     └─────────────┼──────────────────────────────────────┘
                   ▼
            ╭───────────╮
            │   E N D   │
            ╰───────────╯
```

FIG. 6

| | LOW ← NE → HIGH |
|---|---|
| LOW<br>↑<br>TW<br>↓<br>HIGH | qBASE1,1 · · · · · · · · · · · · · qBASE1,j<br><br><br><br>qBASEi,1 · · · · · · · · · · · · · qBASEi,j |

F I G. 7

F I G. 8

F I G. 9

F I G. 1 0

F I G. 1 1

F I G. 1 2

F I G. 1 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1132604 A

- JP 2657713 B